(19) Europäisches Patentamt
European Patent Office
Office européen des brevets

(11) Publication number: **0 079 075**
**B1**

# (12) EUROPEAN PATENT SPECIFICATION

(45) Date of publication of patent specification: **01.02.89**

(51) Int. Cl.$^4$: **C 08 G 63/64,** C 08 G 63/28, C 08 L 67/00

(21) Application number: **82110293.6**

(22) Date of filing: **08.11.82**

## (54) Process for preparing polyesters or poly(estercarbonates) in the presence of a processing aid.

(30) Priority: **09.11.81 US 319402**

(43) Date of publication of application:
**18.05.83 Bulletin 83/20**

(45) Publication of the grant of the patent:
**01.02.89 Bulletin 89/05**

(84) Designated Contracting States:
**AT BE CH DE FR GB IT LI LU NL SE**

(56) References cited:
**EP-A-0 021 654**
**EP-A-0 026 121**
**EP-A-0 026 684**
**EP-A-0 035 269**
**EP-B-0 002 218**
**US-A-3 169 121**
**US-A-4 294 957**

(73) Proprietor: **AMOCO CORPORATION**
**200 East Randolph Drive P.O. Box 5910-A**
**Chicago Illinois 60680 (US)**

(72) Inventor: **Matzner, Markus**
**23 Marshall Drive**
**Edison New Jersey 08817 (US)**
Inventor: **Maresca, Louis Michael**
**RD No.1 Box 139A Riverview Terrace**
**Belle Mead New Jersey 08502 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is directed to a process for preparing a polyester or a poly(ester carbonate) which process comprises reacting a dihydric phenol with an aromatic diacid and a diaryl carbonate in the presence of a processing aid under polyester or poly(ester carbonate) forming conditions.

Polyarylates are polyesters derived from a dihydric phenol, particularly 2,2-bis(4-hydroxyphenyl) propane, also identified as Bisphenol-A, and an aromatic dicarboxylic acid, particularly mixtures of terephthalic and isophthalic acids. These polyarylates are high temperature, high performance thermoplastic polymers with a good combination of thermal and mechanical properties. They also have good processability which allows them to be molded into a variety of articles.

Similarly, polyarylate copolymers containing carbonate linkages, i.e. poly(ester carbonates) display an excellent combination of properties.

Many processes have been described in the literature for the preparation of polyesters and poly(ester-carbonates). One such process reacts a dihydric phenol, a diacid and a diaryl carbonate. Specifically, this latter process involves the reaction of a dihydric phenol, iso- or terephthalic acids, or mixtures thereof, and a diaryl carbonate at temperatures of from about 260 to about 350°C. Optionally, a catalyst may be used.

US—A—3 169 121 discloses a process for preparing poly(ester carbonates) by reacting a difunctional acid with a dihydric phenol and a diaryl carbonate. This process is carried out in the absence of a processing aid which causes severe problems with regard to the viscosity of the reaction system, the reaction time as well as the color and stability of the poly(ester carbonate) produced.

In the so called "diacetate process" for the preparation of polyarylates an aromatic diacid is reacted with the diacetate derivative of a dihydric phenol to form the desired polyarylate. In this reaction an acid, e.g., acetic acid, is formed as a by-product. As a means for the removal of this acid the utilization of specific processing aids has been proposed; cf. US—A—4 294 957 and EP—A—26 121, 26 684 and 35 269.

The present invention is directed to a process for the preparation of a polyester or a poly(ester carbonate) which process comprises reacting a dihydric phenol with an aromatic diacid and a diaryl carbonate in the presence of from 10 to 60 weight percent, based on the weight of the polyester or poly(ester carbonate) produced, of a processing aid as defined in claim 1 under polyester or poly(ester carbonate) forming conditions.

The utilization of from 10 to 60 percent of a processing aid is beneficial in preparing polyesters and poly(ester carbonates) in that the viscosity of the system is decreased. This decrease in viscosity provides a faster reaction time since better mixing of the reactants occurs which allows the reaction to proceed under kinetic control. Additionally, by using the processing aid, reaction times are relatively short so that the polyester or poly(ester carbonate) produced possess vastly improved color, as compared to those prepared under reaction conditions described in the prior art.

Finally, the use of the processing aid prevents the occurrence of undesirable "hot spots" which produce color degradation products which contribute to the color and instability of the polyester or poly(ester carbonate).

The dihydric phenols that may be used in this invention include the following: 2,2-bis(4-hydroxyphenyl)propane, bis-(2-hydroxyphenyl)methane, bis-(4-hydroxyphenyl)methane, bis-(4-hydroxy-2,6-dimethyl-3-methoxyphenyl) methane, 1,1-bis-(4-hydroxyphenyl)ethane, 1,2-bis-(4-hydroxyphenyl)-ethane, 1,1-bis-(4-hydroxy-2-chlorophenyl)ethane, 1,1-bis-(3-methyl-4-hydroxyphenyl)ethane, 1,3-bis-(3-methyl-4-hydroxyphenyl)propane, 2,2-bis-(3-methyl-4-hydroxyphenyl)propane, 2,2-bis-(3-isopropyl-4-hydroxyphenyl)propane, 2,2-bis-2-isopropyl-4-hydroxyphenyl)propane, 2,2-bis-(4-hydroxyphenyl)pentane, 3,3-bis-(4-hydroxyphenyl)pentane, 2,2-bis-(4-hydroxyphenyl)heptane, 1,2-bis-(4-hydroxyphenyl)1,2-bis-(phenyl)propane, 4,4'-(dihydroxyphenyl)ether, 4,4'-(dihydroxyphenyl)sulfide, 4,4'-(dihydroxyphenyl)-sulfoxide, hydroquinone, and naphthalene diols.

Furthermore, up to 80 mole percent of the diol component may be an aliphatic diol such as ethylene glycol, neopentyl glycol, and the like.

The aromatic diacid which can be used herein includes terephthalic acid, isophthalic acid, orthophthalic acid, any of the naphthalene dicarboxylic acids and mixtures thereof, as well as alkyl substituted homologs of these carboxylic acids, wherein the alkyl group contains from 1 to about 4 carbon atoms, and acids containing other inert substituents such as halides, alkyl or aryl ethers, and the like. A variety of other aromatic dicarboxylic acids is useful. These include 4,4'-biphenyl dicarboxylic acid, 4,4'-diphenyloxide dicarboxylic acid, their substituted derivative, etc. Moreover, hydroxyaromatic acids, i.e. 4-hydroxybenzoic acid and the like, are useful. Preferably, mixtures of isophthalic and terephthalic acids are used. The isophthalic acid to terephthalic acid ratio in the mixture is about 20:80 to about 100:0 while the most preferred acid ratio is about 25:75 to about 75:25. Also, from about 0.5 to about 20 percent of aliphatic diacids containing from 2 to about 10 carbon atoms, such as adipic acid, sebacic acid, and the like may be additionally used in the polymerization reaction.

The diaryl carbonate is preferably diphenyl carbonate.

The preparation of the polyester or poly(ester carbonate) is carried out in the presence of from about 10 to about 60, more preferably from about 25 to about 60, and most preferably, from about 30 to about 60 weight percent, based on the weight of the polyester or poly(ester carbonate) produced, of a processing aid selected from diphenyl ether compounds, a cycloaliphatic, substituted aromatic, or heteroaromatic

compound, and a halogenated and/or etherated substituted aromatic or heteroaromatic compound, or mixtures of these.

The diphenyl ether compound may be substituted. These substituents are selected from alkyl groups, chlorine, bromine or any substituent which does not interfere with the polyester or poly(ester carbonate) forming reaction. Additionally, the diphenyl ether compound may be used with up to 50 weight percent of other compounds, such as various biphenyls or any other compounds which do not interfere with the polyester or poly(ester carbonate) forming reaction.

The cycloaliphatic compounds or substituted aromatic or heteroaromatic compounds contain at least one benzylic and/or tertiary hydrogen atom. These compounds have a boiling point of from about 200 to about 280°C., at atmospheric pressure. Additionally, these compounds have a solubility parameter, at a temperature of 250°C., of ± 4 within the solubility parameter of the polyester being produced. Solubility parameter is a measure of correlating polymer solvent interaction. It is defined in "Properties of Polymers," D. W. Van Krevelen, Elsevier Scientific Publishing Co., Amsterdam-Oxford-New York, 1976, pp. 141—155, as the square root of the cohesive energy density.

The cycloaliphatic compounds are of the following formulae:

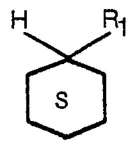

(I)

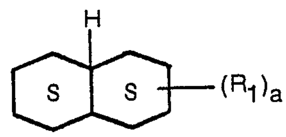

(II)

wherein $R_1$ is independently alkyl of 1 to 6 carbon atoms, cycloalkyl of 6 to 18 carbon atoms, and a is an integer of 1 or 2.

The substituted aromatic compounds are of the following formula:

(III)

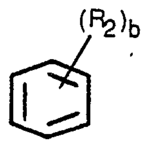

wherein $R_2$ is independently cycloalkyl of 6 to 18 carbon atoms and aralkyl or alkaryl of 7 to 18 carbon atoms and wherein the carbon atom of $R_2$ attached directly to the benzene nucleus has 1 or 2 attached hydrogen atoms, and b is an integer of 1 to 6.

(IV)

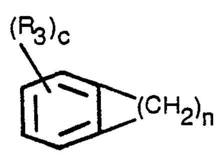

wherein $R_3$ is independently alkyl of 1 to 6 carbon atoms, cycloalkyl of 6 to 18 carbon atoms, c is an integer of 1 or 2, and n is an integer of 1 to 6.

The heteroaromatic compounds are of the following formula:

(V)

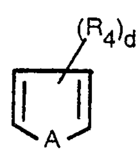

wherein A is S, O, or —CH=N—, $R_4$ is independently alkyl of 1 to 6 carbon atoms, or cycloalkyl of 6 to 18 carbon atoms and wherein the carbon atom of $R_4$ attached directly to the heteroaromatic nucleus has 1 or 2 attached hydrogen atoms, and d is an integer of 1 to 4.

Additionally, the cycloaliphatic, substituted aromatic or heteroaromatic compounds may be used with up to 90 weight percent of other compounds such as diphenyl ether, dimethylsulfone, etc.

The halogenated and/or etherated substituted aromatic or heteroaromatic compounds are of the formulae:

(VI)

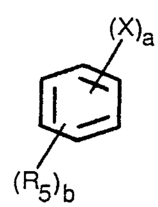

wherein X is independently Cl, Br, F, or $OR_6$, a is an integer of 1 to 5, $R_5$ is independently alkyl of 1 to 16 carbon atoms, cycloalkyl of 6 to 18 carbon atoms, aryl of 6 to 18 carbon atoms, or aralkyl or alkaryl of 7 to 18 carbon atoms, $R_6$ is independently alkyl of 1 to 16 carbon atoms or cycloalkyl of 6 to 18 carbon atoms, and b is integer of 0, 1 or 2;

(VII)

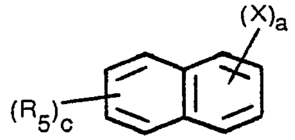

wherein X, $R_1$ and a are as previously defined, and c is an integer of 0 to (8-a).

The heteroatomic compounds are of the following formula:

(VIII)

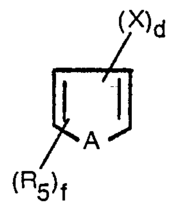

wherein A is O, S, or —CH=N—, X and $R_5$ are as previously defined, d is an integer of 1 to 4 and f is integer of 0 to (4-d).

The compounds encompassed by structures (VI) through (VIII) include 1,2,3-trichlorobenzene; 1,2,4-trichlorobenzene, 1,2,3- or 1,2,4- or 1,3,5-trimethoxy-benzene; 1,2- or 1,3- or 1,4-dibromobenzene; 1-chloronaphthalene; 2-chloronaphthalene; 1-bromona- phthalene; 2-bromonaphthalene; 1,2- or 1,3- or 1,4-dimethoxybenzene; 2-bromotoluene; 4-bromotoluene; 2-bromoanisole; 3-bromoanisole and 4-bromoanisole.

Additionally, the halogenated and/or etherated substituted aromatic of heteroaromatic compounds may be used with up to 90 weight percent of other compounds such as diphenyl ether, dimethylsulfone, diphenyl sulfone etc.

The amount of said processing aid could vary during the polymerization reaction. For example, it may be advantageous to increase progressively the amount of these processing aids to maintain the reaction medium at constant viscosity.

A catalyst may be used to accelerate the transesterification reaction. Examples of catalysts are elemental metals such as sodium, potassium, lithium, calcium, magnesium, barium, tin, strontium, zinc, iron, aluminum, cobalt, lead, nickel, titanium, manganese, or antimony, and compounds of these metals such as their oxides, hydrides, hydroxides, halides, inorganic acid salts, organic acid salts, complex salts, double salts, alcoholates, or phenolates. Preferred catalysts include alkali and alkaline earth metal alkoxides and phenoxides. Other preferred catalysts include titanium compounds such as titanium tetrabutoxide, titanium oxalate, or titanium oxide, tin compounds such as dibutyltin oxide, antimony compounds, such as antimony trioxide, and silicon tin compounds such as the following:

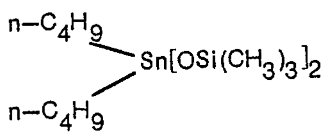

The catalyst is present in the reaction mixture in a catalytically effective amount which can be, for example, from about 1 to about 1000, preferably from about 10 to about 200 parts per million, based on the weight of the polyester produced.

The polyester or poly(ester carbonate) may be prepared by adding the dihydric phenol, aromatic diacid, diaryl carbonate, processing aid, and optionally catalyst to a reaction zone and carrying out the polymerization. Any combination of adding the dihydric phenol, the aromatic diacid, diaryl carbonate, processing aid, and optionally catalyst, to a reaction vessel may be used.

The polymerization process of this invention is carried out under polyester or poly(ester carbonate) forming conditions, i.e. at a temperature of from about 200 to about 350°C., and preferably, from about 250 to about 330°C. The polymerization process in generally conducted in an inert atmosphere (such as argon or nitrogen) so that the oxygen content therein is minimized or eliminated. The process is preferably carried out at a pressure sufficient to have the processing aid refluxing at the reaction temperature. This pressure is generally atmospheric. Lower and higher pressure may also be used.

The polymerization reaction is conducted for a period of time sufficient to produce a polyester or a poly(ester carbonate), having a reduced viscosity of at least about 0.1 to greater than 1.0 dl/gm, which time is generally less than about 10 hours. The reaction time is generally in the range of from about 4 hours to about 8 hours, depending on the particular polyester of poly(estercarbonate) being prepared.

The polymerization reaction of this invention may be carried out batchwise or continuously and by using any apparatus desired.

The diacids and diaryl carbonate may be prereacted first, then the dihydric phenol added or the dihydric phenol and diaryl carbonate can be prereacted and the diacids added.

The process of this invention produces polyesters of poly(ester carbonates) having a reduced viscosity of from about 0.1 to greater than about 1.0, preferably from about 0.2 to about 0.8 dl/gm, as measured in chloroform (0.5 g/dl chloroform) or other suitable solvent at 25°C or another suitable temperature. In those instances where the polyester or poly(ester carbonate) is not soluble in chloroform, other solvents known in the art, such as para-chlorophenol, phenol/tetrachloroethane (60:40), and the like, may be used. Reduced viscosities of the polyesters or poly(ester carbonate) measured in these solvents generally have the same range as those measured in chloroform.

The polyesters or poly(ester carbonates) may be prepared in the presence of additives such as molecular weight regulators, antioxidants, and the like.

In another embodiment of this invention the polymerization reaction can be carried out in the presence of one or more thermoplastic polymers such as polyesters, polycarbonates, styrene polymers, alkyl acrylate polymers, polyurethanes, poly(aryl ether) polymers, polyamides, polyimides, poly(amide imides), poly(ether imides), polyhydroxy ether polymers, copolyetherester block copolymers, and the like to produce novel polymeric materials.

The polyesters of poly(ester carbonates) obtained by the process of this invention may be used together with the well-known additives such as plasticizers, pigments, lubricating agents, mold release agents, stabilizers, inorganic fillers, and the like.

## Examples

The following examples serve to give specific illustrations of the practice of this invention but they are not intended in any way to limit the scope of this invention.

### Example 1

A three neck 250 milliliter round bottom flask was equipped with a mechanical stirrer, a nitrogen inlet and a vacuum jacketed vigreux column with a distillation head and receiver. The flask was charged with 8.30 g (0.050 moles) of isophthalic acid, 8.30 g (0.050 moles) of terephthalic acid, 22.80 g (0.100 moles) of bisphenol A, 43.23 g (0.202 moles) of diphenyl carbonate and 23.87 g of diphenyl ether. The reaction system was flushed with nitrogen for 1 hour at room temperature (about 25°C). While maintaining a constant nitrogen purge, 0.04 g of tetra-n-butyl titanate was added to the mixture and the reaction was heated to 250°C. Phenol began to distill. After 1 hour at 250°C, the reaction temperature was raised to 280°C where it was allowed to remain for an additional 5 hours. Upon cooling to room temperature the reaction mixture was dissolved in 200 ml of methylene chloride. Coagulation in 1000 ml of methanol resulted in the precipitation of the polyester as a white powder. After several methanol washes, the polymer was dried in a vacuum oven for about 12 hours at 120°C.

The reduced viscosity of the dried polymer was measured in chloroform (0.50 g/100 ml) at 25°C and found to be 0.17 dl/g.

### Example 2

The proceedure described in Example 1 was repeated exactly except that di(trimethylsilyloxy)-di-n-butyl tin was used instead of the tetra-n-butyl titanate.

The resulting polymer had a reduced viscosity of 0.17 dl/g.

### Example 3

The proceedure described in Example 1 was repeated exactly except that di(trimethylsilyloxy)di-n-butyl tin was used instead of tetra-n-butyl titanate and 1,3,5-trimethoxy benzene was used instead of diphenyl ether.

The resulting polymer had a reduced viscosity of 0.18 dl/g.

In all instances higher molecular weight product could be obtained by removing the processing aid and phenol under reduced pressure at temperatures of between about 250 and 350°C. This could be accomplished by the reactor or in an extruder; for example in a vented extruder. In the case of the polymers prepared in Example 1 to 3, prior to dissolving them in methylene chloride a small sample of each was heated in a test tube at a pressure of 26.7 Pa (0.2 mm of Hg) at 300°C for 1 hour. Following the standard work described in Example 1 the reduced viscosity of each was measured.

The results are shown in Table I.

TABLE I

| Sample | Reduced Viscosity Prior to Heat Treatment[1] | Reduced Viscosity After Heat Treatment[1] |
|---|---|---|
| Example 1 | 0.17 | 0.38 |
| Example 2 | 0.18 | 0.40 |
| Example 3 | 0.18 | 0.40 |

[1] 300°C at 26.7 Pa (0.2 mm of Hg) for 1 hour.

## Claims

1. A process for preparing a polyester or a poly(ester carbonate) which comprises reacting a dihydric phenol with an aromatic diacid and a diaryl carbonate under polyester or poly(ester carbonate) forming conditions in the presence of from 10 to 60 weight percent of a processing aid selected from

a) a diphenyl ether compound, or

b) a cycloaliphatic compound of the following formulae:

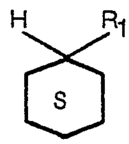

(I)

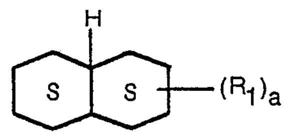

(II)

wherein $R_1$ is independently alkyl of 1 to 6 carbon atoms, cycloalkyl of 6 to 18 carbon atoms, and a is an integer of 1 or 2 or

c) a substituted aromatic compound of the following formula:

(III)

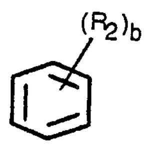

wherein $R_2$ is independently cycloalkyl of 6 to 18 carbon atoms and aralkyl or alkaryl of 7 to 18 carbon atoms and wherein the carbon atom of $R_2$ attached directly to the benzene nucleus has 1 or 2 attached hydrogen atoms, and b is an integer of 1 to 6, or

(IV)

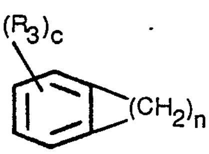

wherein $R_3$ is independently alkyl of 1 to 6 carbon atoms, cycloalkyl of 6 to 18 carbon atoms, c is an integer of 1 or 2, and n is an integer of 1 to 6, or

d) a heteroaromatic compound of the following formula:

(V)

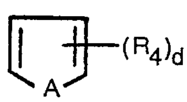

wherein A is S, O, or —CH=N—, $R_4$ is independently alkyl of 1 to 6 carbon atoms, or cycloalkyl of 6 to 18 carbon atoms and wherein the carbon atom of $R_4$ attached directly to the heteroaromatic nucleus has 1 or 2 attached hydrogen atoms, and d is an integer of 1 to 4, or

e) a halogenated and/or etherated substituted aromatic compound of the formulae:

(VI)

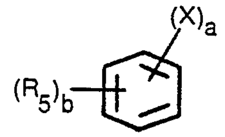

wherein X is independently Cl, Br, F, or $OR_6$, a is an integer of 1 to 5, $R_5$ is independently alkyl of 1 to 16 carbon atoms, cycloalkyl of 6 to 18 carbon atoms, aryl of 6 to 18 carbon atoms, or aralkyl or alkaryl of 7 to 18 carbon atoms, $R_6$ is independently alkyl of 1 to 16 carbon atoms or cycloalkyl of 6 to 18 carbon atoms, and b is an integer of 0, 1 or 2; or

(VII)

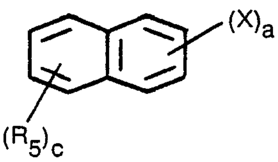

wherein X, $R_1$ and a are as previously defined, and c is an integer of 0 to (8-a) or

f) a halogenated and/or etherated substituted heteroaromatic compound of the following formula:

(VIII)

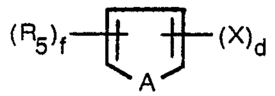

wherein A is O, S, or —CH=N—, X and $R_5$ are as previously defined, d is an integer of 1 to 4 and f is an integer of 0 to (4-d), or

g) mixtures of these.

2. A process as defined in claim 1, wherein the process is carried out in the presence of a catalyst.

3. A process as defined in claim 2 wherein the catalyst is selected from

a) elemental metals such as sodium, potassium, lithium, calcium, magnesium, barium, tin, strontium, zinc, iron, aluminum, cobalt, lead, nickel, titanium, manganese, or antimony, and compounds of these metals such as their oxides, hydrides, hydroxides, halides, inorganic acid salts, organic acid salts, complex salts, double salts, alcoholates, or phenolates, or

b) an alkali or alkaline earth metal alkoxide or phenoxide, or

c) a compound of the following formula:

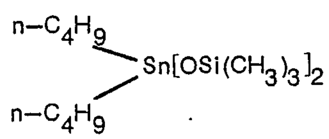

4. A process as defined in any of claims 1 to 3, wherein from about 0.5 to about 20 percent of an aliphatic diacid is added to the reaction mixture.

5. A process as defined in any of claims 1 to 4, wherein an aliphatic diol is added to the reaction mixture.

6. A process as defined in any of claims 1 to 5, wherein the diaryl carbonate is diphenyl carbonate.

7. A process as defined in any of claims 1 to 6, wherein the process is carried out at a temperature of from about 200 to about 350°C.

8. A process as defined in any of claims 1 to 7, wherein the process is carried out in the presence of one or more thermoplastic polymers.

9. A process as defined in claim 8, wherein the thermoplastic polymer is selected from polyesters, polycarbonates, styrene polymers, alkyl acrylate polymers, polyurethanes, poly(aryl ether) polymers, polyamides, polyimides, poly(amide imides), poly(ether imides), polyhydroxy ether polymers, and copolyetherester block copolymers.

**Patentansprüche**

1. Verfahren zur Herstellung eines Polyesters oder Poly(estercarbonats), welches umfaßt die Umsetzung eines zweiwertigen Phenols mit einer aromatischen Disäure und einem Diarylcarbonat unter Polyester- oder Poly(estercarbonat)-Bildungsbedingungen in Anwesenheit von 10 bis 60 Gewichtsprozent eines Verarbeitungshilfsmittels, ausgewählt aus

(a) einer Diphenyletherverbindung oder

(b) einer cycloaliphatischen Verbindung der folgenden Formeln:

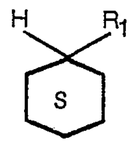

(I)

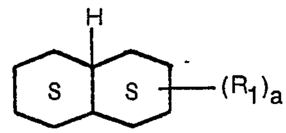

(II)

worin $R_1$ unabhängig Alkyl mit 1 bis 6 Kohlenstoffatomen oder Cycloalkyl mit 6 bis 18 Kohlenstoffatomen ist und a eine ganze Zahl von 1 oder 2 ist, oder

(c) einer substituierten aromatischen Verbindung der folgenden Formel:

(III)

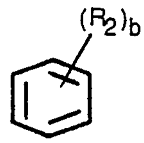

worin $R_2$ unabhängig Cycloalkyl mit 6 bis 18 Kohlenstoffatomen und Aralkyl oder Alkaryl mit 7 bis 18 Kohlenstoffatomen ist und worin das Kohlenstoffatom von $R_2$, welches direkt an den Benzolkern gebunden ist, ein oder zwei gebundene Wasserstoffatome aufweist, und b eine ganze Zahl von 1 bis 6 ist, oder

(IV)

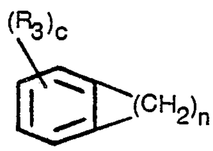

worin $R_3$ unabhängig Alkyl mit 1 bis 6 Kohlenstoffatomen oder Cycloalkyl mit 6 bis 18 Kohlenstoffatomen ist, c eine ganze Zahl von 1 oder 2 ist und n eine ganze Zahl von 1 bis 6 ist, oder

(d) einer heteroaromatischen Verbindung der folgenden Formel:

(V)

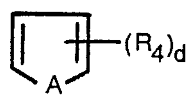

worin A, S, O oder —CH=N— ist, $R_4$ unabhängig Alkyl mit 1 bis 6 Kohlenstoffatomen oder Cycloalkyl mit 6 bis 18 Kohlenstoffatomen ist und worin das Kohlenstoffatom von $R_4$, welches direkt an den heteroaromatischen Kern gebunden ist, ein oder zwei gebundene Wasserstoffatome aufweist und d eine ganze Zahl von 1 is 4 ist, oder

(e) einer halogenierten und/oder veretherten, substituierten aromatischen Verbindung der Formeln:

(VI)

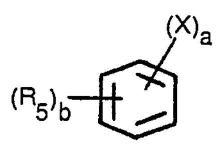

worin X unabhängig Cl, Br, F oder $OR_6$ ist, a eine ganze Zahl von 1 bis 5 ist, $R_5$ unabhängig Alkyl mit 1 bis 16 Kohlenstoffatomen, Cycloalkyl mit 6 bis 18 Kohlenstoffatomen, Aryl mit 6 bis 18 Kohlenstoffatomen oder Aralkyl oder Alkaryl mit 7 bis 18 Kohlenstoffatomen ist, $R_6$ unabhängig Alkyl mit 1 bis 16 Kohlenstoffatomen oder Cycloalkyl mit 6 bis 18 Kohlenstoffatomen ist und b eine ganze Zahl aus 0, 1 oder 2 ist; oder

(VII)

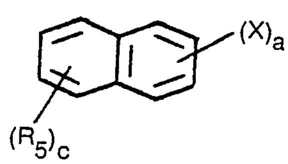

worin X, $R_1$ und a wie vorstehend definiert sind und c eine ganze Zahl von 0 bis (8-a) ist, oder

(f) einer halogenierten und/oder veretherten, substituierten heteroaromatischen Verbindung der folgenden Formel:

(VIII)

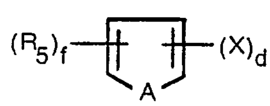

worin A O, S oder —CH=N— ist, X und $R_5$ wie vorstehend definiert sind, d eine ganze Zahl von 0 bis (4-d) ist, oder
(g) Mischungen derselben.

2. Verfahren nach Anspruch 1, wobei das Verfahren in Anwesenheit eines Katalysators durchgeführt wird.

3. Verfahren nach Anspruch 2, worin der Katalysator ausgewählt ist aus
(a) elementaren Metallen, wie Natrium, Kalium, Lithium, Calcium, Magnesium, Barium, Zinn, Strontium, Zink, Eisen, Aluminium, Kobalt, Blei, Nickel, Titan, Mangan oder Antimon, und Verbindungen dieser Metalle, wie z.B. deren Oxiden, Hydriden, Hydroxiden, Halogeniden, Salzen mit anorganischen Säuren, Salzen mit organischen Säuren, Komplexsalzen, Doppelsalzen, Alkoholaten oder Phenolaten, oder (b) Alkali- oder Erdalkalimetall-Alkoxiden oder -Phenoxiden oder
(c) einer Verbindung der folgenden Formel:

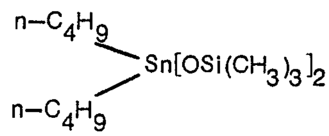

4. Verfahren nach irgendeinem der Ansprüche 1 bis 3, worin etwa 0,5 bis etwa 20 Prozent einer aliphatischen Disäure zu der Reaktionsmischung gegeben werden.

5. Verfahren nach irgendeinem der Ansprüche 1 bis 4, worin ein aliphatisches Diol zu der Reaktionsmischung gegeben wird.

6. Verfahren nach irgendeinem der Ansprüche 1 bis 5, worin das Diarylcarbonat Diphenylcarbonat ist.

7. Verfahren nach irgendeinem der Ansprüche 1 bis 6, worin das Verfahren bei einer Temperatur von etwa 200 bis etwa 350°C durchgeführt wird.

8. Verfahren nach irgendeinem der Ansprüche 1 bis 7, worin das Verfahren in Anwesenheit eines oder mehrerer thermoplastischer Polymerer durchgeführt wird.

9. Verfahren nach Anspruch 8, worin das thermoplastische Polymer ausgewählt ist aus Polyestern, Polycarbonaten, Styrol-Polymeren, Alkylacrylat-Polymeren, Polyurethanen, Poly(arylether)-Polymeren, Polyamiden, Polyimiden, Poly(amidimiden), Poly(etherimiden), Polyhydroxyether-Polymeren und Copolyetherester-Blockcopolymeren.

**Revendications**

1. Procédé de préparation d'un polyester ou d'un poly(ester carbonique), qui consiste à faire réagir un phénol dihydroxylique avec un diacide aromatique et un carbonate-de diaryle dans des conditions de formation d'un polyester ou d'un poly(ester carbonique) en présence de 10 à 60% en poids d'une substance auxiliaire de traitement choisie entre
a) un éther de diphényle ou
b) un composé cycloaliphatique de formules suivantes:

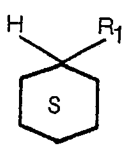

(I)

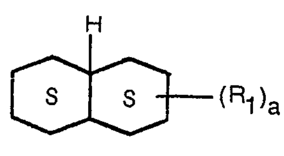

(II)

dans lesquelles $R_1$ représente, indépendamment, un groupe alkyle ayant 1 à 6 atomes de carbone, cycloalkyle ayant 6 à 18 atomes de carbone et a est le nombre entier 1 ou 2, ou bien
c) un composé aromatique substitué de formule suivante:

(III)

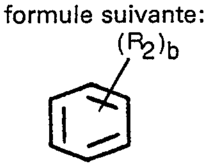

dans laquelle $R_2$ représente, indépendamment, un groupe cycloalkyle de 6 à 18 atomes de carbone et un groupe aralkyle ou alkaryle de 7 à 18 atomes de carbone, et l'atome de carbone de $R_2$ attaché directement au noyau benzénique porte 1 ou 2 atomes d'hydrogène, et b est un nombre entier de 1 à 6 ou de formule

(IV)

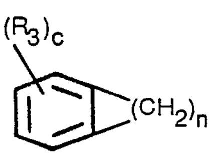

dans laquelle $R_3$ représente, indépendamment, un groupe alkyle ayant 1 à 6 atomes de carbone, cycloalkyle ayant 6 à 18 atoms de carbone, c est le nombre entier 1 ou 2 et n est un nombre entier de 1 à 6 ou bien

d) un composé hétéro-aromatique de formule suivante:

(V) 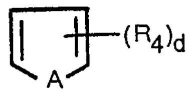

dans laquelle A représente S, O ou le groupe —CH=N—, $R_4$ représente, indépendamment, un groupe alkyle de 1 à 6 atomes de carbone ou cycloalkyle de 6 à 18 atomes de carbone et l'atome de carbone de $R_4$ attaché directement au noyau hétéro-aromatique porte 1 ou 2 atomes d'hydrogène, et d est un nombre entier de 1 à 4, ou bien

e) un composé aromatique à substituants halogéno et/ou éther de formules:

(VI) 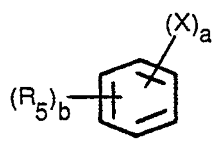

dans laquelle X représente, indépendamment, Cl, Br, F, ou $OR_6$, a est un nombre entier de 1 à 5, $R_5$ représente, indépendamment, un groupe alkyle de 1 à 16 atomes de carbone, cycloalkyle de 6 à 18 atomes de carbone, aryle de 6 à 18 atomes de carbone ou aralkyle ou alkaryle de 7 à 18 atomes de carbone, $R_6$ représente, indépendamment, un groupe alkyle de 1 à 16 atomes de carbone ou cycloalkyle de 6 à 18 atomes de carbone et b est le nombre entier 0, 1 ou 2; ou

(VII) 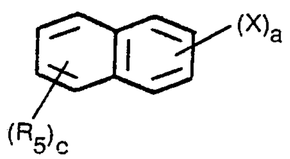

dans laquelle X, $R_1$ et a ont les définitions déjà données et c est un nombre entier de 0 à (8-a), ou bien

f) un composé hétéro-aromatique à substituants halogéno et/ou éther de formule suivante:

(VIII) 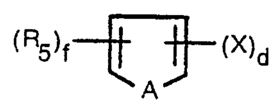

dans laquelle A représente O, S ou le groupe —CH=N—, X et $R_5$ ont les définitions données ci-dessus, d est un nombre entier de 1 à 4 et f est un nombre entier de 0 à (4-d), ou bien

g) des mélanges de ces composés.

2. Procédé suivant la revendication 1, qui est mis en oeuvre en présence d'un catalyseur.

3. Procédé suivant la revendication 2, dans lequel le catalyseur est choisi entre

a) des métaux élémentaires tels que le sodium, le potassium, le lithium, le calcium, le magnésium, le baryum, l'étain, le strontium, le zinc, le fer, l'aluminium, le cobalt, le plomb, le nickel, le titane, le manganèse ou l'antimoine, et des composés de ces métaux tels que leurs oxydes, hydrures, hydroxydes, halogénures, sels d'acides inorganiques, sels d'acides organiques, sels complexes, sels doubles, alcoolates ou phénolates, ou bien

b) un alcoolate ou phénolate de métal alcalin ou alcalinoterreux ou bien

c) un composé de formule suivante:

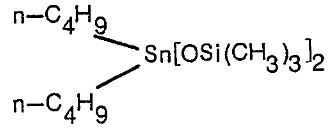

4. Procédé tel que défini dans l'une quelconque des revendications 1 à 3, dans lequel ou ajoute au mélange réactionnel environ 0,5 à environ 20% d'un diacide aliphatique.

5. Procédé tel que défini dans l'une quelconque des revendications 1 à 4, dans lequel on ajoute un diol aliphatique au mélange réactionnel.

6. Procédé tel que défini dans l'une quelconque des revendications 1 à 5, dans lequel le carbonate de diaryle est le carbonate de diphényle.

7. Procédé tel que défini dans l'une quelconque des revendications 1 à 6, qui est mis en oeuvre à une température d'environ 200 à environ 350°C.

8. Procédé tel que défini dans l'une quelconque des revendications 1 à 7, qui est mis en oeuvre en présence d'un ou plusieurs polymères thermoplastiques.

9. Procédé tel que défini dans la revendication 8, dans lequel le polymère thermoplastique est choisi entre des polyesters, des polycarbonates, des polymères de styrène, des polymères d'acrylates d'alkyle, des polyuréthannes, des polymères du type poly(aryléther), des polyamides, des polyimides, des poly(amide-imides), des poly(éther-mides), des polymères du type polyhydroxyéthers et des copolymères séquencés du type copolyéther-ester.